# EUROPÄISCHE PATENTSCHRIFT

(11) **EP 1 532 380 B1**
(45) Veröffentlichungstag und Bekanntmachung des Hinweises auf die Patenterteilung: **30.10.2013**
(21) Anmeldenummer: 03735580.7
(22) Anmeldetag: 07.06.2003
(51) Int. Cl.: F16D 65/097

(54) **BREMSHALTER EINER SCHWIMMSATTEL-SCHEIBENBREMSE MIT BREMSBELAGFÜHRUNGSFEDER**
BRAKE HOLDER FOR A FLOATING-CALIPER DISK BRAKE WITH A BRAKE PAD GUIDE SPRING
SUPPORT DE FREIN A DISQUE A ETRIER FLOTTANT POURVU D'UN RESSORT DE GUIDAGE DE GARNITURES DE FREIN

(30) Priorität: 24.07.2002 DE 10233446
(43) Veröffentlichungstag der Anmeldung: 25.05.2005
(73) Patentinhaber: Continental Teves AG & Co. oHG, 60488 Frankfurt am Main (DE)
(72) Erfinder: HENDRICH, Uwe, 61449 Steinbach (DE); MÜLLER, Reiner, 65795 Hattersheim 1 (DE); WEILER, Rolf, 65817 Eppstein (DE)
(86) Internationale Anmeldenummer: PCT/EP2003/006011
(87) Internationale Veröffentlichungsnummer: WO 2004/015294

(56) Entgegenhaltungen:
- WO-A-01/31223
- DE-A- 10 050 013
- DE-A- 19 610 611
- US-A- 4 181 200
- US-A- 4 607 728

## Beschreibung

Die Erfindung betrifft eine Schwimmsattel-Scheibenbremse für Kraftfahrzeuge mit einem Bremshalter, an dem beiderseits einer zugehörigen Bremsscheibe angeordnete Bremsbeläge verschiebbar gelagert sind. Dabei ist zur Gewährleistung einer leichten Verschiebbarkeit eine Bremsbelagführungsfeder vorgesehen, die sich zwischen dem Bremshalter und den Bremsbelägen erstreckt.

Aus der DE 100 50 013 A1 ist eine gattungsgemäße Scheibenbremse mit einem fahrzeugfesten Bremshalter bekannt. Dort sind die Bremsbeläge entsprechend axial verschiebbar im Bremshalter geführt, wobei zur leichteren Verschiebbarkeit zwischen Bremshalter und den Bremsbelägen ein Gleitfederelement platziert ist, über das mindestens ein Bremsbelag radial am Bremshalter verrastet ist. Dabei ist das Gleitfederelement radial verliersicher am Bremshalter befestigt. Das Gleitfederelement ist dazu in seiner geometrischen Formgebung an ein Führungsprofil im Bremshalter angepasst, das auch der verschiebbaren Aufnahme der Bremsbeläge dient. Somit ergibt sich eine formschlüssige Befestigung des Gleitfederelementes am Bremshalter. Eine solche formschlüssige Verbindung von Gleitfederelement und Bremshalter bedeutet jedoch eine schlechte bzw. aufwändige Montierbarkeit des Gleitfederelementes am Bremshalter. Darüber hinaus ist für die beschriebene Anordnung die gleichzeitige Befederung des Bremsbelages mittels des Gleitfederelementes unzureichend, so dass eine grundsätzlich klapperfreie Führung der Bremsbeläge nicht sichergestellt werden kann.

Ausgehend davon ist es die Aufgabe der Erfindung, einen gattungsgemäßen Bremshalter mit entsprechender Bremsbelagführungsfeder anzugeben, der eine komfortable Befederung eines zugehörigen Bremsbelages im Bremshalter mittels der Bremsbelagführungsfeder ermöglicht.

Gelöst wird diese Aufgabe durch eine Schwimmsattel-Scheibenbremse für Kraftfahrzeuge mit entsprechender Bremsbelagführungsfeder nach Patentanspruch 1. Demnach ist es ermöglicht, dass der Federarm eine axial gerichtete Federkraftkomponente erzeugt, welche den Bremsbelag grundsätzlich von einer Bremsscheibe wegdrückt, und dadurch einer verbesserten Lüftspieleinstellung zwischen Bremsbelag und Bremsscheibe dient.

Eine vorteilhafte Ausführung der Schwimmsattel-Scheibenbremse wird dadurch erreicht, dass die Halteklammer an einer entsprechend gestalteten radialen Hinterschneidung des Bremshalters verrastet ist. Eine solche Hinterschneidung ist bevorzugt innerhalb des Führungsabschnittes der Bremsbeläge am Bremshalter ausgebildet. Dies gestattet die Anformung der Hinterschneidung während der ohnehin notwendigen Bearbeitung des Führungsabschnitts für die Bremsbeläge. Zusätzlich ist es sinnvoll axial wirksame Halteklammern vorzusehen. Damit lässt sich die verrastete Bremsbelagführungsfeder sowohl radial als auch axial am Bremshalter fixieren. Zur weiteren Verbesserung der Bremsbelagführungsfederbefestigung kann es sinnvoll sein die Verrastung unlösbar zu gestalten, so dass die Bremsbelagführungsfeder nach ihrer Verrastung nicht zerstörungsfrei vom Bremshalter entfernt werden kann. Eine alternative Befestigung der Bremsbelagführungsfeder erfolgt über eine geeigneten Vorsprung am Bremshalter, an dem die Halteklammer verrastet ist bzw. den die Halteklammer umgreift. Dies erlaubt je nach Anwendungsfall die Bremsbelagführungsfederbefestigung sowohl axial als auch radial mittels einer einzigen Halteklammer.

Eine bevorzugte Variante der Schwimmsattel-Scheibenbremse sieht vor, dass die Bremsbelagführungsfeder zur radialen Verriegelung des Bremsbelages am Federarm einen ersten Abschnitt aufweist, der einen radialen Anschlag für den montierten Bremsbelag bildet. Nach der radialen Montage des Bremsbelages im Bremshalter mit Bremsbelagführungsfeder wird dieser somit am radialen Ausheben aus dem Führungsabschnitt des Bremshalters gehindert.

Zur Erleichterung der Gestaltung einer klapperfreien Gesamtanordnung der Schwimmsattel-Scheibenbremse kann vorgesehen sein, dass die am Bremshalter verrastete Bremsbelagführungsfeder wenigstens an Führungsflächen des Bremshalters, die für die verschiebbare Anordnung der Bremsbeläge am Bremshalter vorgesehenen sind, spielfrei anliegt.

Eine weitere vorteilhafte Variante der Schwimmsattel-Scheibenbremse ergibt sich dadurch, dass zur erleichterten radialen Bremsbelagmontage am Federarm eine Montageschräge ausgebildet ist. Dies vereinfacht das radiale Einschieben der Bremsbeläge in den Bremshalter, so dass ein Verkanten der Bremsbeläge im Bremshalter verhindert wird.

Eine sinnvolle Weiterentwicklung der Schwimmsattel-Scheibenbremse sieht vor, dass der Federarm bei montiertem Bremsbelag unter Vorspannung an einer schrägen Anlagefläche des Bremsbelags anliegt und diesen somit spielfrei gegenüber dem Bremshalter verspannt. Die unerwünschte Entwicklung von Klappergeräuschen kann somit zuverlässig unterbunden werden. In diesem Zusammenhang erweist es sich als günstig, an die schräge Anlagefläche am Bremsbelag einen tangential wirksamen Anschlag für den Federarm anzuschließen. Dieser Anschlag dient als tangentiales Widerlager für den Federarm. Somit kann der Bremsbelag durch die Einwirkung des Federarmes sowohl radial als auch tangential klapperfrei gegenüber dem Bremshalter verspannt werden.

Insbesondere ist bei montiertem Bremsbelag die Vorspannkraft des Federarms in Abhängigkeit von der axialen Position des Bremsbelags an der Schräge variabel.

Die Vorspannkraft des Federarms mit Schräge verändert sich somit in Abhängigkeit vom Verschiebeweg des Bremsbelags im Bremshalter. Mittels der Schräge ergibt sich also eine axial auf den Bremsbelag gerichtete Kraftkomponente, die zur Lüftspieleinstellung zwischen dem Bremsbelag und einer zugehörigen Bremsscheibe genutzt werden kann.

Weitere sinnvolle Detailmerkmale der Erfindung sind den Ausführungsbeispielen in den Figuren zu entnehmen und werden im folgenden näher erläutert.

Es zeigt:
- Fig.1: drei Ansichten eines Bremshalters mit einer Bremsbelagführungsfeder für die Bremsbeläge in einer ersten Ausführungsform;
- Fig.2: zwei Ansichten der Bremsbelagführungsfeder aus Figur 1;
- Fig.3: zwei Ansichten eines Bremshalters sowie einer zugehörigen Bremsbelagführungsfeder, die nicht erfindungsgemäß sind;
- Fig.4: zwei Ansichten eines Bremshalters sowie einer zugehörigen Bremsbelagführungsfeder, die nicht erfindungsgemäß sind;
- Fig.5: eine Teilansicht eines Bremshalters mit einer zugehörigen Bremsbelagführungsfeder in einer weiteren Ausführungsform und
- Fig.6: eine Teilansicht eines Bremshalters mit einer zugehörigen Bremsbelagführungsfeder in einer weiteren Ausführungsform und.

Der in den Figuren gezeigte Bremshalter 1 ist Bestandteil einer Schwimmsattel-Scheibenbremse, wie sie häufig innerhalb von Kraftfahrzeugen zum Einsatz kommt. Der Bremshalter 1 ist dabei fahrzeugfest angeordnet beispielsweise über Gewinde- bzw. Durchgangsbohrungen 2. Andererseits ist es ebenso denkbar den Bremshalter 1 in ein fahrzeugfestes Bauteil, wie z. B. den Achsschenkel zu integrieren. Der Bremshalter 1 dient einerseits der verschiebbaren Lagerung eines nicht gezeigten Schwimmsattels sowie andererseits der axial 3 verschiebbaren Aufnahme der Bremsbeläge 6, die beiderseits der zugehörigen Bremsscheibe angeordnet sind. Dabei werden die Bremsscheibe und die Bremsbeläge 6 vom Schwimmsattel übergriffen.

Zur Aufnahme der Bremsbeläge 6 besitzt der Bremshalter 1 Halterarme 7, die die nicht gezeigte Bremsscheibe an ihrem radial außenliegenden Rand axial 3 übergreifen. Hierbei beziehen sich die in der Figurenbeschreibung verwendeten Richtungsbezeichnungen, axial 3, tangential 4 und radial 5, auf die Rotationsachse der Bremsscheibe. An den Halterarmen 7 sind mehrere Führungsflächen 8-10 ausgebildet, die eine verschiebbare Führung der Bremsbeläge 6 ermöglichen. Dazu greifen die Bremsbeläge 6 jeweils mit seitlichen Führungsabschnitten 11 im wesentlichen formschlüssig in die von den Führungsflächen 8-10 gebildete Führungsausnehmung 12 der Halterarme 7 ein. Die Anlage der Führungsabschnitte 11 an den Führungsflächen 8-10 erlaubt damit eine Übertragung auftretender Bremsumfangskräfte in den Bremshalter 1. Die Gestaltung der L-förmigen Führungsabschnitte 11 am Bremsbelag 6 sowie der zugehörigen Führungsflächen 8-10 gestattet ferner eine gleichmäßige Abstützung der Bremsumfangskräfte an beiden Halterarmen 7.

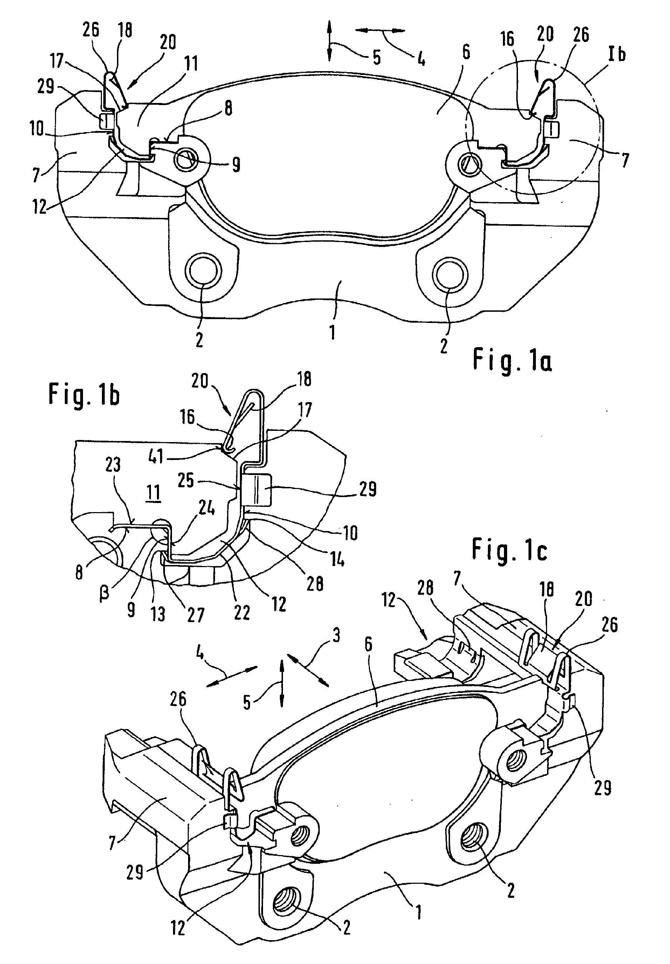

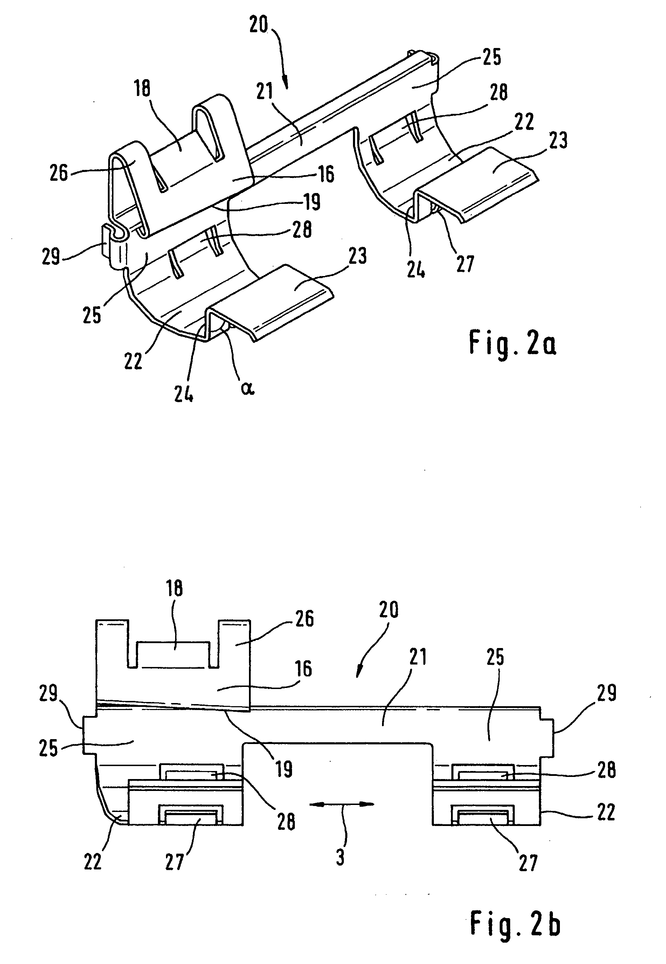

Zur Erhöhung der Leichtgängigkeit der Bremsbelagführung innerhalb der Halterarme 7 ist eine Bremsbelagführungsfeder 20 vorgesehen, die sich in einer ersten Ausführung nach den Figuren 1-2 jeweils zwischen dem Bremshalter 1 bzw. den Führungsflächen 8-10 und dem Bremsbelag 6 erstreckt. Eine solche Bremsbelagführungsfeder 20 verhindert den direkten Kontakt zwischen Bremsbelag 6 und Bremshalter 1 und erleichtert die Verschiebbarkeit des Bremsbelags 6 durch entsprechende Oberflächenbeschaffenheit der Bremsbelagführungsfeder 20. Dazu ist die Bremsbelagführungsfeder 20 vorzugsweise aus einem Blechzuschnitt, etwa aus Federstahl, gefertigt oder einem sonstigen Material, das zumindest an seiner Oberfläche gute Gleiteigenschaften aufweist. Gleichzeitig erfüllt die Bremsbelagführungsfeder 20 gegenüber dem Bremsbelag 6 eine Federwirkung, so dass der Bremsbelag 6 klapperfrei am Bremshalter 1 gehalten wird.

Die Bremsbelagführungsfeder 20 umfasst einen Basisabschnitt 21, der beiderseits in einen Führungsabschnitt 22 übergeht, und einen Federarm 26. Am Führungsabschnitt 22 sind Kontaktflächen 23-25 zur Anlage des zugehörigen Bremsbelages 6 vorgesehen, die eine leichtgängige Verschiebung des Bremsbelags 6 gegenüber dem Bremshalter 1 gewährleisten. Der Federarm 26 dient der radialen Verrastung des Bremsbelages 6 am Bremshalter 1 und bewirkt gleichzeitig eine klapperfreie Verspannung dessen gegenüber dem Bremshalter 1. Dazu ist die Bremsbelagführungsfeder 20 zunächst verliersicher am Halterarm 7 befestigt. Dies geschieht über zumindest eine Halteklammer 27, 28, 29, die die Bremsbelagführungsfeder 20 am Bremshalter 1 verrastet. Gemäß der ersten Ausführung der Bremsbelagführungsfeder 20 nach den Figuren 1-2 greifen die radial 5 wirksamen Halteklammern 27, 28 jeweils in eine Hinterschneidung 13, 14 am Halterarm 7 bzw. innerhalb der Führungsausnehmung 12. Die Halteklammern 27, 28 selbst sind durch einfache Bearbeitung aus dem Führungsabschnitt 22 ausgestellt. Die Gestaltung der Halteklammern 27, 28 sowie der zugehörigen Hinterschneidungen 13, 14 ermöglicht damit eine besonders günstige Montage der Bremsbelagführungsfeder 20 am Bremshalter 1. Dabei wird die Bremsbelagführungsfeder 20 radial 5 in die Führungsausnehmung 12 am Halterarm 7 eingeschoben, bis die Halteklammern 27, 28 in die Hinterschneidungen 13, 14 einrasten. Die Halteklammern 27, 28 fixieren also die Bremsbelagführungsfeder 20 radial im Halterarm 7, wobei der Führungsabschnitt 22 zumindest im Bereich Führungsflächen 8-10 spielfrei in der Führungsausnehmung 12 anliegt. Die Führungs- 8-10 bzw. die Kontaktflächen 23-25 dienen dabei der Anlage bzw. Abstützung der Bremsbeläge 6. Die spielfreie Anlage der Bremsbelagführungsfeder 20 wird unter anderem auch dadurch erreicht, dass der eingeschlossene Winkel α zwischen den Kontaktflächen 23, 24 an der Bremsbelagführungsfeder 20 geringfügig kleiner dimensioniert ist als der eingeschlossene Winkel β zwischen den Führungsflächen 8, 9 am Halterarm 7. Bei verrasteter Bremsbelagführungsfeder 20 ergibt sich somit die spielfreie Anlage. Insgesamt ergeben die eingerasteten Halteklammern 27, 28 eine derart feste Verbindung, dass die Bremsbelagführungsfeder 20 nicht zerstörungsfrei vom Bremshalter 1 wieder demontiert werden kann. Die weiteren Halteklammern 29 umgreifen den Halterarm 7 axial 3 auf beiden Seiten und bewirken damit eine axial definierte Positionierung der Bremsbelagführungsfeder 20 am Halterarm 7.

Zur radial wirksamen Verriegelung wenigstens eines Bremsbelages 6 ist an der Bremsbelagführungsfeder 20 weiterhin ein Federarm 26 ausgebildet, der durch Anlage am Bremsbelag 6 diesen gleichzeitig gegenüber dem Bremshalter 1 verspannt. Nach den Figuren 1-2 ist an der Bremsbelagführungsfeder 20 nur eine einziger Federarm 26 vorgesehen, der nur auf einen der Bremsbeläge 6 einwirkt. Selbstverständlich sind auch Ausführungen der Bremsbelagführungsfeder 20 mit zwei Federarmen 26 denkbar, die auf beide Bremsbeläge 6 einwirken. Im einzelnen ist am Federarm 26 zur radialen Verriegelung des Bremsbelages 6 ein erster Abschnitt 16 vorgesehen, der einen radialen Anschlag 16 für den Bremsbelag 6 bildet. Dieser radiale Anschlag 16 wird vorzugsweise in Form einer abgewinkelten oder abgerundeten Kante des Federarmendabschnittes gestaltet. Der Federarm 26 bewirkt jedoch nicht nur die radiale Verriegelung des Bremsbelags 6 am Bremshalter 1 sondern auch dessen klapperfreie Verspannung gegenüber dem Bremshalter 1. Dazu liegt der Federarm 26 mit seinem ersten Abschnitt 16 unter Federvorspannung einerseits an einer schrägen Anlagefläche 17 und andererseits an einem tangential 4 wirksamen Anschlag 41 am Bremsbelag 6 an. Durch die Anlage des Federarms 26 ergibt sich für dem Bremsbelag eine Federkraftkomponente sowohl in radialer 5 als auch in tangentialer 4 Richtung. Diese Federvorspannung sorgt für eine radial und tangential klapperfreie Anordnung des Bremsbelags 6.

Die im wesentlichen V-förmige Gestaltung des Federarms 26 bewirkt weiterhin eine einfache Montierbarkeit des Bremsbelags 6. Dabei wird der Bremsbelag 6 während einer Bremsbelagmontage radial von außen in die im Halterarm 7 verrastete Bremsbelagführungsfeder 20 eingeschoben bis der Federarm 26 mit seinem ersten Abschnitt 16 an der schrägen Anlagefläche 17 bzw. am tangentialen Anschlag 16 zur Anlage gerät. Ferner ergibt sich eine zusätzliche Montagevereinfachung des Bremsbelags 6 durch Ausbildung einer Montageschräge 18 am Federarm 26. Die Montageschräge 18 erleichtert das radiale Einschieben des Bremsbelags 6 und verhindert dessen Verkanten.

Eine weitere auf den Bremsbelag 6 einwirkende Federkraftkomponente wird durch Ausbildung einer Schräge 19 am ersten Abschnitt 16 des Federarms 26 realisiert. Diese Schräge 19 bildet einen Winkel gegenüber der Achsrichtung 3 und liegt bei fertig montiertem Bremsbelag 6 an diesem an. In Abhängigkeit von der axialen Position des Bremsbelags 6 innerhalb der Führungsabschnitts 22 ergibt sind demzufolge eine veränderliche Krafteinwirkung mittels des Federarms 26 auf dem Bremsbelag 6. Dies führt zu einer axial 3 gerichteten Federkraftkomponente, die den Bremsbelag 6 bei betriebsbereiter Scheibenbremse von der nicht gezeigten Bremsscheibe wegzudrücken sucht. Die Schräge 19 lässt sich damit während des Bremsenbetriebs zur besseren Lüftspieleinstellung zwischen Bremsbelag 6 und Bremsscheibe nutzen. Als weitere Alternative zur Realisierung einer axialen Federkraftkomponente mittels der Schräge 19 kann der Federarm 26 beispielsweise auch bezogen auf eine Ebene senkrecht zur Achsrichtung 3 asymmetrisch ausgebildet sein.

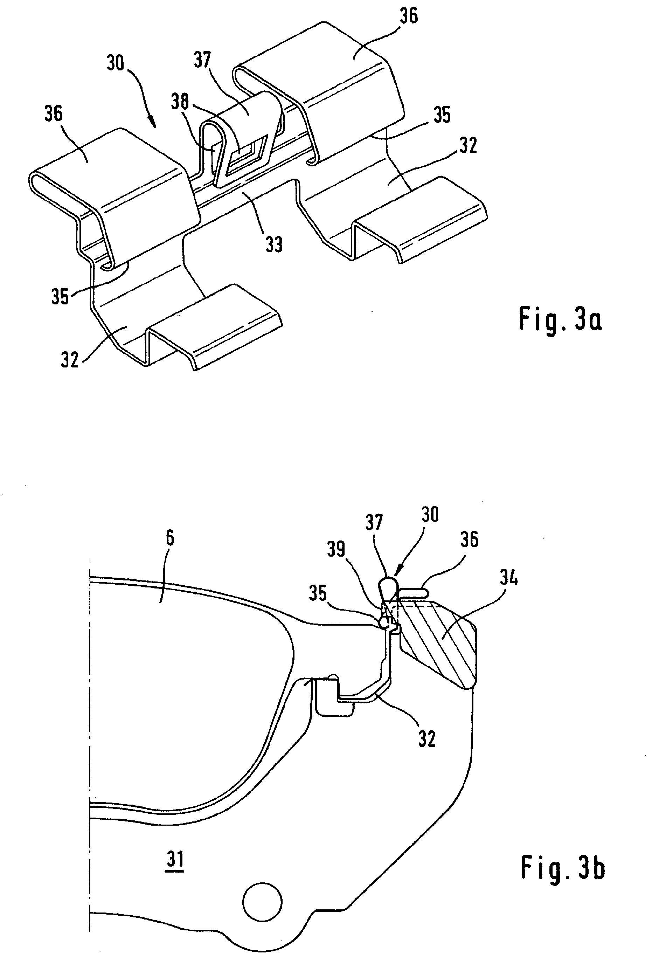

Figur 3a-b zeigt in zwei Ansichten eines Bremshalters 31 mit zugehöriger Bremsbelagführungsfeder 30. Dabei weist die Bremsbelagführungsfeder 30 wie bereits beschrieben einen Basisabschnitt 33 auf, der zwei Führungsabschnitte 32 zur Bremsbelagaufnahme miteinander verbindet. Die Führungsabschnitte 32 sind ihrerseits im fertig montierten Zustand in den Führungsausnehmungen 12 des Halterarms 34 angeordnet. Im Unterschied zum bisher erläuterten Ausführungsbeispiel weist die Bremsbelagführungsfeder 30 nach Figur 3a-b zwei Federarme 36 auf, die jeweils über einen ersten Abschnitt 35 in Form eines radialen Anschlags an einem zugehörigen Bremsbelag 6 unter Federvorspannung anliegen. Damit können gemäß dieser Ausführungsvariante der Bremsbelagführungsfeder 30 beide Bremsbeläge 6 radial verriegelt und klapperfrei verspannt werden. Ferner weisen die beiden Federarme 36 gegenüber der ersten Ausführungsform der Bremsbelagführungsfeder eine andere geometrische Gestaltung auf. Insbesondere sind die Federarme 36 länger und stark geschwungen ausgebildet. Allgemein lässt sich durch die definierte Auslegung des Federarmes 36 die gewünschte Federvorspannkraft, die auf den Bremsbelag 6 einwirkt, innerhalb bestimmter Toleranzen einstellen. Durch die Federarmgestaltung kann somit die Federvorspannkraft je nach Anwendungsfall gezielt eingestellt werden. Im Rahmen der Erfindung sind also verschiedene Federarmgestaltungen denkbar. Zur montagefreundlichen Befestigung der Bremsbelagführungsfeder 30 am Bremshalter 31 ist nur eine einzige Halteklammer 37 vorgesehen. Diese Halteklammer 37 besitzt zumindest eine Öffnung 38, die bei verrasteter Bremsbelagführungsfeder 30 einen entsprechend gestalteten Vorsprung 39 am Halterarm 34 im wesentlichen formschlüssig umschließt. Dadurch wird die Bremsbelagführungsfeder 30 sowohl radial als auch axial am Halterarm 34 fixiert und lässt sich dennoch sehr einfach radial montieren.

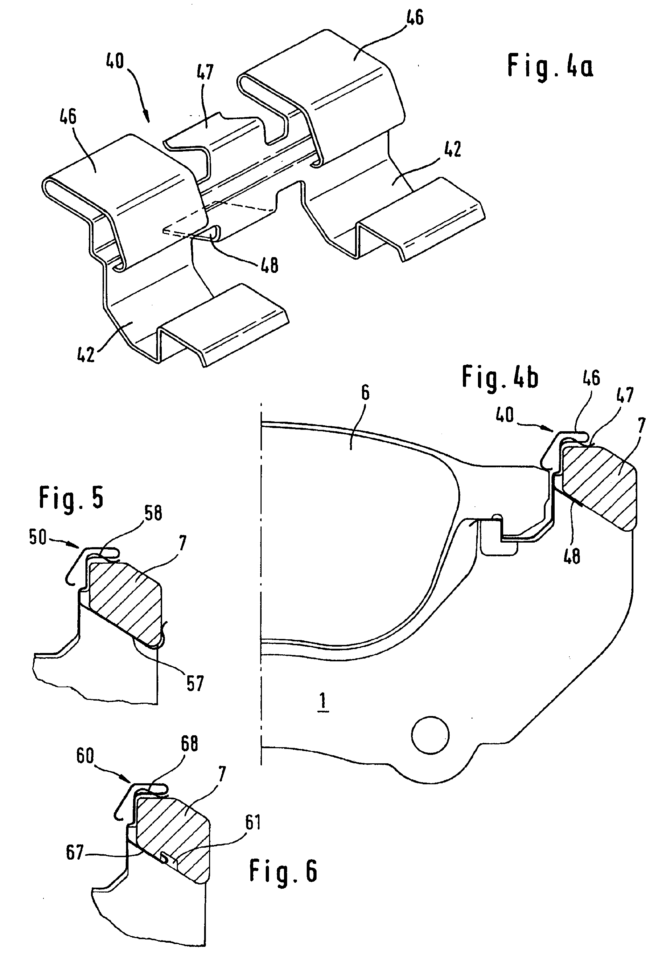

Figur 4a-b ist in zwei Ansichten eine weitere Bauform einer Bremsbelagführungsfeder 40 zu entnehmen. Die Bremsbelagführungsfeder 40 weist für jeden der zugehörigen Bremsbeläge 6 einen entsprechenden Führungsabschnitt 42 sowie einen Federarm 46 auf. Zur Befestigung der Bremsbelagführungsfeder 40 am Bremshalter 1 bzw. Halterarm 7 sind zwei Halteklammern 47, 48 vorgesehen, die den Halterarm 7 umgreifen. Im einzelnen liegen die Halteklammern 47, 48 unter Vorspannung im Bereich des Scheibenfreigangs am Halterarm 7 an, d. h. in einem Abschnitt des Halterarms 7, der sich unmittelbar radial außerhalb die Bremsscheibe überragt bzw. sich zwischen den Führungsausnehmungen 12 am Halterarm erstreckt. Die beiden Halterklammern 47, 48 sorgen damit sowohl für eine radiale als auch eine axiale Fixierung der Bremsbelagführungsfeder 40 am Halterarm 7. Ferner kann durch die Verwendung derartiger Halteklammern 47, 48 eine zusätzliche Bearbeitung am Halterarm 7 zur Befestigung der Bremsbelagführungsfeder 40 entfallen.

Die Figuren 5-6 zeigen zwei weitere Varianten zur Befestigung einer erfindungsgemäßen Bremsbelagführungsfeder 50, 60 an einem entsprechenden Halterarm 7. Dabei sind jeweils zwei Halteklammern 57, 58 bzw. 67, 68 vorgesehen, mittels derer die Bremsbelagführungsfeder 50, 60 am Halterarm 7 verrastet ist. Die Halteklammern 57, 58 bzw. 67, 68 gewährleisten somit jeweils ein radiale sowie axiale Fixierung der Bremsbelagführungsfeder 50, 60 am Halterarm 7. Gemäß Figur 5 umgreift die Halteklammer 57 den Halterarm 7 im Bereich des Scheibenfreigangs bogenförmig, so dass der Halterarm 7 über fast die Hälfte seines Umfangs von der Halteklammer 57 umschlossen wird. Dadurch ergibt sich ein sehr guter Halt der Bremsbelagführungsfeder 50 am Halterarm 7, ohne zusätzlich mechanische Bearbeitung des Halterarms 7.

Die Variante der Bremsbelagführungsfeder 60 nach Figur 6 erreicht die verliersichere Befestigung am Halterarm 7 dadurch, dass die Halteklammer 67 mit ihrem Endabschnitt in eine zugehörige Tasche 61 des Halterarms 7 im wesentlichen formschlüssig eingreift. Die ermöglicht ebenfalls eine positionsgenaue und zuverlässige Fixierung am Halterarm 7.

## Patentansprüche

1. Schwimmsattel-Scheibenbremse mit axial verlaufenden Halterarmen (7, 34), an denen zugehörige, beiderseits einer Bremsscheibe angeordnete Bremsbeläge (6), die radial in einem Bremshalter (1, 31) montierbar sind, verschiebbar angeordnet sind, mit zumindest einer Bremsbelagführungsfeder (20, 30, 40, 50, 60), die zwischen dem Bremshalter (1, 31) und den Bremsbelägen (6) angeordnet ist und einen Federarm (26) aufweist, wobei die Bremsbelagführungsfeder (20, 30, 40, 50, 60) im wesentlichen radial (5) am Bremshalter (1, 31) montierbar ist und mittels zumindest einer Halteklammer (27-29, 37, 47, 48, 57, 58, 67, 68) sowohl radial (5) als auch axial (3) am Bremshalter (1, 31) verrastet ist, wobei an der Bremsbelagführungsfeder (20, 30, 40, 50, 60) zumindest ein Federarm (26, 36, 46) ausgebildet ist, der wenigstens einen Bremsbelag (6) unter Federvorspannung spielfrei am Bremshalter (1, 31) fixiert und wobei der Federarm (26, 36, 46) einen ersten Abschnitt (16) aufweist, der einen radialen Anschlag für den montierten Bremsbelag (6) bildet, **dadurch gekennzeichnet, dass** der Federarm (26,36,46) derart am Bremsbelag (6) anliegt, dass eine axial gerichtete Federkraftkomponente vorliegt, die den Bremsbelag (6) von einer Bremsscheibe wegdrückt, indem der erste Abschnitt (16) des Federarms (26) bezogen auf die Achsrichtung (3) als Schräge (19) ausgebildet ist, oder der Federarm (26,36,46) bezogen auf eine Ebene senkrecht zur Achsrichtung (3) asymmetrisch ausgebildet ist.

2. Schwimmsattel-Scheibenbremse nach Anspruch 1, **dadurch gekennzeichnet, dass** die Halteklammer (27-29, 47, 48, 57, 58, 67, 68) an einer radialen Hinterschneidung (13, 14, 61) verrastet ist.

3. Schwimmsattel-Scheibenbremse (31) mit Bremsbelagführungsfeder (30) nach Anspruch 1, **dadurch gekennzeichnet, dass** die Halteklammer (37) an einem Vorsprung (39) am Bremshalter (31) verrastet ist.

4. Schwimmsattel-Scheibenbremse nach einem der vorhergehenden Ansprüche, **dadurch gekennzeichnet, dass** die verrastete Bremsbelagführungsfeder (20, 30, 40, 50, 60) wenigstens an für die verschiebbare Anordnung der Bremsbeläge (6) am Bremshalter (1, 31) vorgesehenen Führungsflächen (9-10) spielfrei anliegt.

5. Schwimmsattel-Scheibenbremse nach einem der vorhergehenden Ansprüche, **dadurch gekennzeichnet, dass** zur radialen Bremsbelagmontage am Federarm (26, 36, 46) eine Montageschräge (18) ausgebildet ist.

6. Schwimmsattel-Scheibenbremse nach einem der vorhergehenden Ansprüche, **dadurch gekennzeichnet, dass** der Federarm (26, 36, 46) bei montiertem Bremsbelag (6) unter Vorspannung an einer schrägen Anlagefläche (17) des Bremsbelags (6) anliegt.

7. Schwimmsattel-Scheibenbremse nach Anspruch 6, **dadurch gekennzeichnet, dass** sich an die schräge Anlagefläche (17) ein tangential wirksamer Anschlag (41) anschließt.

8. Schwimmsattel-Scheibenbremse nach Anspruch 1, **dadurch gekennzeichnet, dass** bei montiertem Bremsbelag (6) die Vorspannkraft des Federarms (26) in Abhängigkeit von der axialen Position des Bremsbelags (6) an der Schräge (19) variabel ist.

## Claims

1. Floating-caliper disc brake with axially extending holder arms (7, 34) on which associated brake pads (6) which are arranged on both sides of a brake disc and which can be mounted radially in a brake holder (1, 31) are arranged in a displaceable manner, having at least one brake pad guiding spring (20, 30, 40, 50, 60) which is arranged between the brake holder (1, 31) and the brake pads (6) and which has a spring arm (26), wherein the brake pad guiding spring (20, 30, 40, 50, 60) can be mounted substantially radially (5) on the brake holder (1, 31) and is latched to the brake holder (1, 31) both radially (5) and also axially (3) by means of at least one holding clip (27-29, 37, 47, 48, 57, 58, 67, 68), wherein, on the brake pad guiding spring (20, 30, 40, 50, 60), there is formed at least one spring arm (26, 36, 46) which fixes at least one brake pad (6) on the brake holder (1, 31) under spring preload and without play, and wherein the spring arm (26, 36, 46) has a first portion (16) which forms a radial stop for the mounted brake pad (6), **characterized in that** the spring arm (26, 36, 46) bears against the brake pad (6) such that there is an axially directed spring force component which pushes the brake pad (6) away from a brake disc, by virtue of the first portion (16) of the spring arm (26) being formed with an incline (19) with respect to the axial direction (3), or by virtue of the spring arm (26, 36, 46) being of asymmetrical form with respect to a plane perpendicular to the axial direction (3).

2. Floating-caliper disc brake according to Claim 1, **characterized in that** the holding clip (27-29, 47, 48, 57, 58, 67, 68) is latched to a radial undercut (13, 14, 61).

3. Floating-caliper disc brake (31) with brake pad guiding spring (30) according to Claim 1, **characterized in that** the holding clip (37) is latched to a projection (39) on the brake holder (31).

4. Floating-caliper disc brake according to one of the preceding claims, **characterized in that** the latched brake pad guiding spring (20, 30, 40, 50, 60) bears without play at least against guide surfaces (9-10) provided for the displaceable arrangement of the brake pads (6) on the brake holder (1, 31).

5. Floating-caliper disc brake according to one of the preceding claims, **characterized in that** a mounting incline (18) is formed on the spring arm (26, 36, 46) for the purpose of radial brake pad mounting.

6. Floating-caliper disc brake according to one of the preceding claims, **characterized in that**, when the brake pad (6) is mounted, the spring arm (26, 36, 46) bears under preload against an inclined abutment surface (17) of the brake pad (6).

7. Floating-caliper disc brake according to Claim 6, **characterized in that** a tangentially acting stop (41) adjoins the inclined abutment surface (17).

8. Floating-caliper disc brake according Claim 1, **characterized in that**, when the brake pad (6) is mounted, the preload force of the spring arm (26) is variable as a function of the axial position of the brake pad (6) on the incline (19).

## Revendications

1. Frein à disque à étrier flottant comprenant des bras de retenue (7, 34) s'étendant axialement, sur lesquels sont disposés de manière déplaçable des garnitures de frein (6) associées disposées de part et d'autre d'un disque de frein, lesquelles peuvent être montées radialement dans un support de frein (1, 31), comprenant au moins un ressort de guidage de garnitures de frein (20, 30, 40, 50, 60) qui est disposé entre le support de frein (1, 31) et les garnitures de frein (6) et comprend un bras de ressort (26), le ressort de guidage de garnitures de frein (20, 30, 40, 50, 60) pouvant être monté essentiellement radialement (5) sur le support de frein (1, 31) et étant encliqueté, au moyen d'au moins une pince de retenue (27-29, 37, 47, 48, 57, 58, 67, 68), non seulement radialement (5) mais encore axialement (3) sur le support de frein (1, 31), au moins un bras de ressort (26, 36, 46) étant réalisé sur le ressort de guidage de garnitures de frein (20, 30, 40, 50, 60), lequel bras de ressort fixe au moins une garniture de frein (6) sans jeu sur le support de frein (1, 31) par une précontrainte de ressort, et le bras de ressort (26, 36, 46) comprenant une première section (16) qui forme une butée radiale pour la garniture de frein (6) montée, **caractérisé en ce que** le bras de ressort (26, 36, 46) s'applique contre la garniture de frein (6) de telle sorte qu'il existe une composante de force de ressort orientée axialement qui pousse la garniture de frein (6) à l'écart d'un disque de frein, par le fait que la première section (16) du bras de ressort (26) est réalisée sous forme de biseau (19) par rapport à la direction axiale (3) ou que le bras de ressort (26, 36, 46) est asymétrique par rapport à un plan perpendiculaire à la direction axiale (3).

2. Frein à disque à étrier flottant selon la revendication 1, **caractérisé en ce que** la pince de retenue (27-29, 47, 48, 57, 58, 67, 68) est encliquetée sur une contre-dépouille radiale (13, 14, 61).

3. Frein à disque à étrier flottant comprenant un ressort de guidage de garnitures de friction (30) selon la revendication 1, **caractérisé en ce que** la pince de retenue (37) est encliquetée sur une saillie (39) sur le support de frein (31).

4. Frein à disque à étrier flottant selon l'une quelconque des revendications précédentes, **caractérisé en ce que** le ressort de guidage de garnitures de frein (20, 30, 40, 50, 60) encliqueté s'applique sans jeu au moins contre des surfaces de guidage (9-10) prévues sur le support de frein (1, 31) pour l'agencement déplaçable des garnitures de frein (6).

5. Frein à disque à étrier flottant selon l'une quelconque des revendications précédentes, **caractérisé en ce qu'**un biseau de montage (18) est réalisé sur le bras de ressort (26, 36, 46) pour le montage radial des garnitures de frein.

6. Frein à disque à étrier flottant selon l'une quelconque des revendications précédentes, **caractérisé en ce que**, lorsque la garniture de frein (6) est montée, le bras de ressort (26, 36, 46) s'applique avec précontrainte contre une surface d'appui oblique (17) de la garniture de frein (6).

7. Frein à disque à étrier flottant selon la revendication 6, **caractérisé en ce qu'**une butée (41) agissant tangentiellement se raccorde à la surface d'appui oblique (17).

8. Frein à disque à étrier flottant selon la revendication 1, **caractérisé en ce que**, lorsque la garniture de frein (6) est montée, la force de précontrainte du bras de ressort (26) est variable en fonction de la position axiale de la garniture de frein (6) sur le biseau (19).
